# EUROPÄISCHE PATENTSCHRIFT

(11) **EP 1 502 042 B1**
(45) Veröffentlichungstag und Bekanntmachung des Hinweises auf die Patenterteilung: **05.10.2005**
(21) Anmeldenummer: 03724872.1
(22) Anmeldetag: 23.04.2003
(51) Int. Cl.: F16H 59/02, G05G 1/10

(54) **BETRIEBSART-STEUERGERÄT FÜR EIN AUTOMATIKGETRIEBE**
OPERATING-MODE CONTROL ASSEMBLY FOR AN AUTOMATIC GEARBOX
ENSEMBLE DE COMMANDE DE MODE DE FONCTIONNEMENT POUR UNE TRANSMISSION AUTOMATIQUE

(30) Priorität: 24.04.2002 DE 10218233
(43) Veröffentlichungstag der Anmeldung: 02.02.2005
(73) Patentinhaber: ADAM OPEL AG, 65423 Rüsselsheim (DE)
(72) Erfinder: REBEL, Matthias, 63303 Dreieich (DE)
(86) Internationale Anmeldenummer: PCT/DE2003/001325
(87) Internationale Veröffentlichungsnummer: WO 2003/091605

(56) Entgegenhaltungen:
- WO-A-98/53379
- DE-A- 10 042 557
- US-A- 5 197 344
- US-A1- 2001 045 138
- PATENT ABSTRACTS OF JAPAN Bd. 1998, Nr. 05, 30. April 1998 (1998-04-30) & JP 10 016594 A (MITSUBISHI MOTORS CORP), 20. Januar 1998 (1998-01-20)

## Beschreibung

Die vorliegende Erfindung betrifft ein Betriebsart-Steueraggregat für ein Automatikgetriebe, insbesondere für Kraftfahrzeuge.

Automatikgetriebe mit einem bewegbaren Schalthebel, einer Steuereinheit zum Umschalten des Getriebes zwischen diversen Betriebsmodi wie etwa Vorwärtslauf mit automatischer Gangwahl, Rückwärtslauf, Leerlauf oder Parken in Abhängigkeit von der Bewegung bzw. Stellung des Schalthebels sind seit langem bekannt. In jüngerer Zeit sind Steueraggregate für Automatikgetriebe in Gebrauch gekommen, die darüber hinaus einen Schalter aufweisen, der es dem Fahrer erlaubt, aus dem Modus mit automatischer Gangwahl in einen Modus zu wechseln, in welchem er in der Lage ist, den am Automatikgetriebe einzulegenden Gang willkürlich vorzugeben.

Bekannte Steueraggregate dieser Art weisen einen in zwei Freiheitsgraden beweglichen Schalthebel auf, wobei eine Bewegung in Richtung des ersten Freiheitsgrades dem Benutzer die Auswahl zwischen Vorwärtslauf mit automatischer Gangwahl, Rückwärtslauf, Leerlauf oder Parkstellung ermöglicht. Eine Bewegung des Schalthebels in Richtung des zweiten Freiheitsgrades, die im allgemeinen nur möglich ist, wenn sich der Schalthebel in seiner dem Vorwärtslaufmodus mit automatischer Gangwahl entsprechenden Stellung befindet, bewirkt den Übergang zum Modus mit Gangwahl durch den Benutzer.

So ist z. B. bei einem von der Fa. Honda verwendeten Steueraggregat der Schalthebel in einer an der Fahrzeug-Mittelkonsole montierten Maske geführt, die einen ersten, im wesentlichen in Längsrichtung des Fahrzeugs orientierten Schlitz aufweist, in welchem der Schalthebel mehrere stabile Positionen einnehmen kann, die, der Reihe nach, dem Parkmodus, dem Rückwärtslauf, Leerlauf, Vorwärtslauf mit uneingeschränkter automatischer Gangwahl sowie Vorwärtslaufzuständen mit eingeschränkter automatischer Gangwahl entsprechen. Von dem Ort des Längsschlitzes, der der Stellung des Schalthebels bei automatischer, uneingeschränkter Gangwahl entspricht, geht ein Querschlitz aus, durch welchen der Schalthebel seitwärts in eine weitere stabile Stellung bewegbar ist, die der Gangwahl durch den Benutzer entspricht. In dieser Stellung ist der Schalthebel in Längsrichtung des Fahrzeugs zu zwei Anschlägen schwenkbar, die keinen stabilen Stellungen des Schalthebels entsprechen. Wenn der Schalthebel an einem dieser Anschläge erfasst wird, wird die Schaltstufe des Getriebes, soweit es möglich ist, d.h. soweit ein höherer bzw. niedrigerer Gang vorhanden ist, inkrementiert bzw. dekrementiert.

Ein derartiges Steueraggregat erfordert einen aufwendigen Trägermechanismus zum Unterstützen des Bewegungsmusters des Schalthebels in den zwei Freiheitsgraden. Ein solcher Trägermechanismus ist notwendigerweise kostspieliger als einer, der nur einen Freiheitsgrad unterstützt, und auch sein Gewicht und Volumen ist im allgemeinen höher.

Bei einem zweiten bekannten Betriebsart-Steueraggregat, das von der Fa. Alfa Romeo eingesetzt wird, erlaubt der Schalthebel das Umschalten zwischen Rückwärtslaufmodus, Leerlauf und Vorwärtslauf mit Gangwahl durch den Benutzer. Zum Umschalten in den Vorwärtslaufmodus mit automatischer Gangwahl ist an einer Fahrzeug-Mittelkonsole in der Nähe des Gangschalthebels ein Schalter angeordnet. Auch bei diesem Steueraggregat sind zwei zueinander orthogonale Schwenkfreiheitsgrade für den Schalthebel vorgesehen. Das Umschalten zwischen Vorwärtslauf mit automatischer Gangwahl und Vorwärtslauf mit Gangwahl durch den Fahrer ist hier relativ beschwerlich, da der Fahrer, um den Schalter zu finden, entweder diesen ertasten oder seinen Blick von der Straße auf die Mittelkonsole wenden muss.

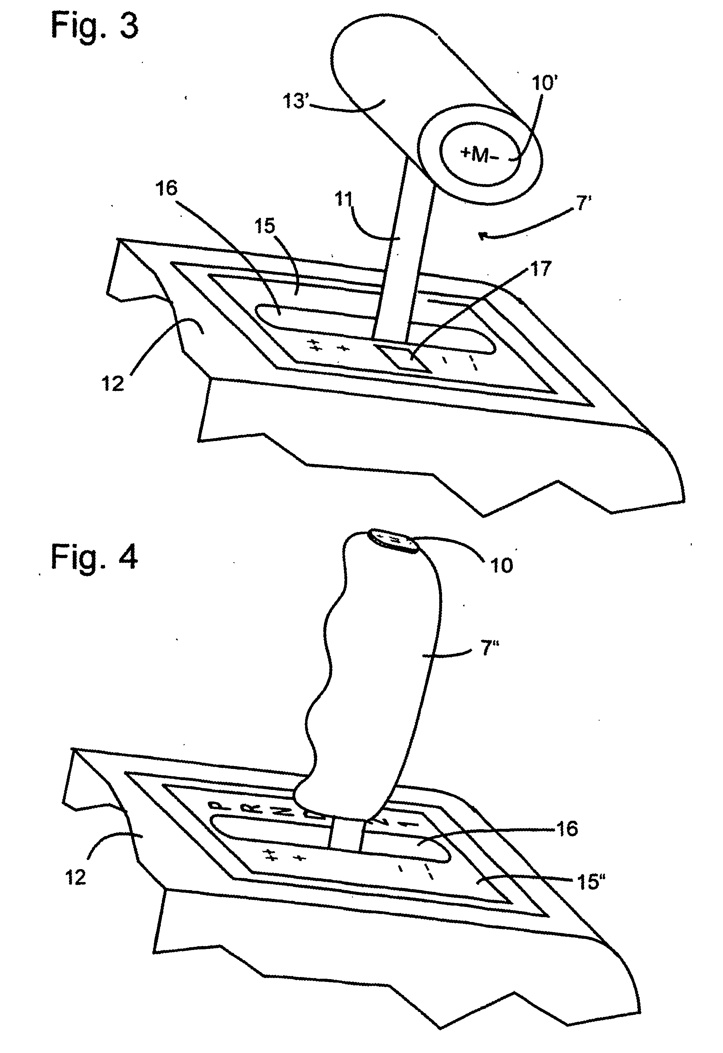

Die gattungsbildende US 5,197,344 offenbart verschiedene Ausführungsbeispiele von Betriebsart-Steueraggregaten mit einem Schalthebel, Trägermechanismus und Steuereinheit- bzw. Steuerschaltung gemäß dem Hauptanspruch, die sowohl eine vollautomatische Gangwahl als auch eine manuelle Gangwahl erlauben, und von denen das der Fig. 4 als nächstkommender Stand der Technik angesehen wird. Bei einigen der Ausführungsbeispiele erfolgt die manuelle Gangwahl mittels eines am Schalthebel angeordneten Kippschalters. Bei diesem Kippschalter besteht allerdings die Gefahr einer unbeabsichtigten Betätigung. Insbesondere ist der Kippschalter für ein Umgreifen des Schalthebels hinderlich. Bei anderen Ausführungsbeispielen wird durch Bewegen des Schalthebels in eine M-Position oder durch axiales Bewegen des Schalthebels in einen Zustand des Steueraggregats gewechselt, in dem die Gänge manuell durch Bewegen des Schalthebels festlegbar sind. In beiden Fällen muss der Schalthebel in zwei Freiheitsgraden beweglich sein, und bei unachtsamer Betätigung des Schalthebels besteht die Gefahr, dass er in beiden Freiheitsgraden gleichzeitig bewegt wird und dadurch eine vom Fahrer nicht gewollte Reaktion ausgelöst wird.

Aufgabe der vorliegenden Erfindung ist, ein Betriebsart-Steueraggregat zu schaffen, das sowohl eine vollautomatische Gangwahl als auch eine Gangwahl durch den Fahrer unterstützt und dabei einfach und sicher zu bedienen ist.

Dies wird erfindungsgemäß dadurch erreicht, dass der Schalter zum Umschalten zwischen automatischer Gangwahl und Gangwahl durch den Fahrer am Griff des Schalthebels angeordnet ist. So kann der Fahrer den Schalter leicht und schnell finden, ohne ihn mit den Augen suchen zu müssen.

Um eine unwillkürliche Betätigung des Schalters zu vermeiden, ist es zweckmäßig, dem Schalthebel einen Handgriff mit einer langgestreckten Form zu verleihen, so dass ein Benutzer zum Betätigen des Schalthebels im allgemeinen dessen mittleren Bereich umgreifen wird, und den Schalter an einem Längsende des Handgriffs anzubringen, den der Fahrer zum Schalten nicht notwendigerweise berührt.

vorzugsweise weist der Schalthebel im zweiten Zustand der Steuerschaltung eine einzige stabile Stellung auf. Durch Auslenken des Schalthebels aus dieser stabilen Stellung ist ein Herauf- oder Herunterschalten der Gange möglich.

Eine wesentliche Vereinfachung des Trägermechanismus für den Schalthebel ist möglich, wenn der Schalthebel auch im ersten Zustand der Steuerschaltung eine einzige stabile Stellung aufweist. Dann ist ein Wechsel zwischen den im ersten Zustand der Steuerschaltung erreichbaren Modi des Getriebes ebenfalls durch Auslenken des Schalthebels möglich.

Da zum Umschalten zwischen automatischer Gangwahl und Gangwahl durch den Fahrer der Schalter eingesetzt wird, besteht keine Notwendigkeit eine Bewegungsfreiheit des Schalthebels in zwei Freiheitsgraden zuzulassen. Durch Beschränkung der Bewegungsfreiheit des Schalthebels auf einen Freiheitsgrad lässt sich eine weitere deutliche Vereinfachung des Trägermechanismus erreichen, durch die Baugröße, Kosten und Gewicht des Steueraggregats reduziert werden können.

Bei einer einfachen Ausgestaltung des Steueraggregats weist der Schalthebel an den Enden seines Bewegungsfreiheitsbereichs jeweils eine erste bzw. zweite Umschaltstellung auf, in der er durch einen mit der Steuerschaltung verbundenen Sensor erfassbar ist. Wenn die Steuerschaltung in ihrem zweiten Zustand über den Sensor erfasst, dass der Schalthebel in einer dieser zwei Umschaltstellungen ist, inkrementiert oder dekrementiert sie den in dem Getriebe einzulegenden Gang, soweit möglich, um eine Schaltstufe.

Bei einer weiterentwickelten Ausgestaltung des Steueraggregats existiert an wenigstens einem Ende des Bewegungsfreiheitsbereichs des Schalthebels eine dritte oder vierte Umschaltstellung jenseits der ersten bzw. zweiten Umschaltstellung, in der der Schalthebel durch eine mit der Steuerschaltung verbundenen Sensor erfassbar ist. Wenn die Steuerschaltung in ihrem zweiten Zustand den Schalthebel in der dritten oder vierten Umschaltstellung erfasst, inkrementiert oder dekrementiert die Steuerschaltung, soweit möglich, den im Getriebe einzulegenden Gang um zwei Schaltstufen.

Die Erfassung des Schalthebels in einer dieser Umschaltstellungen durch den Sensor kann im ersten Zustand der Steuerschaltung vorteilhaft genutzt werden, um den Modus des Getriebes zwischen Vorwärtslauf mit automatischer Gangwahl und einem der anderen Modi wie Parken, Rückwärtslauf, etc. umzuschalten.

Hierfür ist es insbesondere zweckmäßig, wenn die Steuerschaltung und die Steuereinheit in einer gemeinsamen elektronischen Schaltung realisiert sind.

Weitere Merkmale und Vorteile der Erfindung ergeben sich aus der nachfolgenden Beschreibung von Ausführungsbeispielen mit Bezug auf die beigefügten Figuren. Es zeigen:
- Fig. 1: ein Blockdiagramm des Triebstrangs eines Kraftfahrzeugs, das mit einem erfindungsgemäßen Steueraggregat ausgestattet ist; und
- Fig. 2: bis
- Fig. 4: jeweils perspektivische schematische Ansichten einer Mittelkonsole eines Fahrzeugs mit einem daran montierten Schalthebel gemäß der Erfindung.

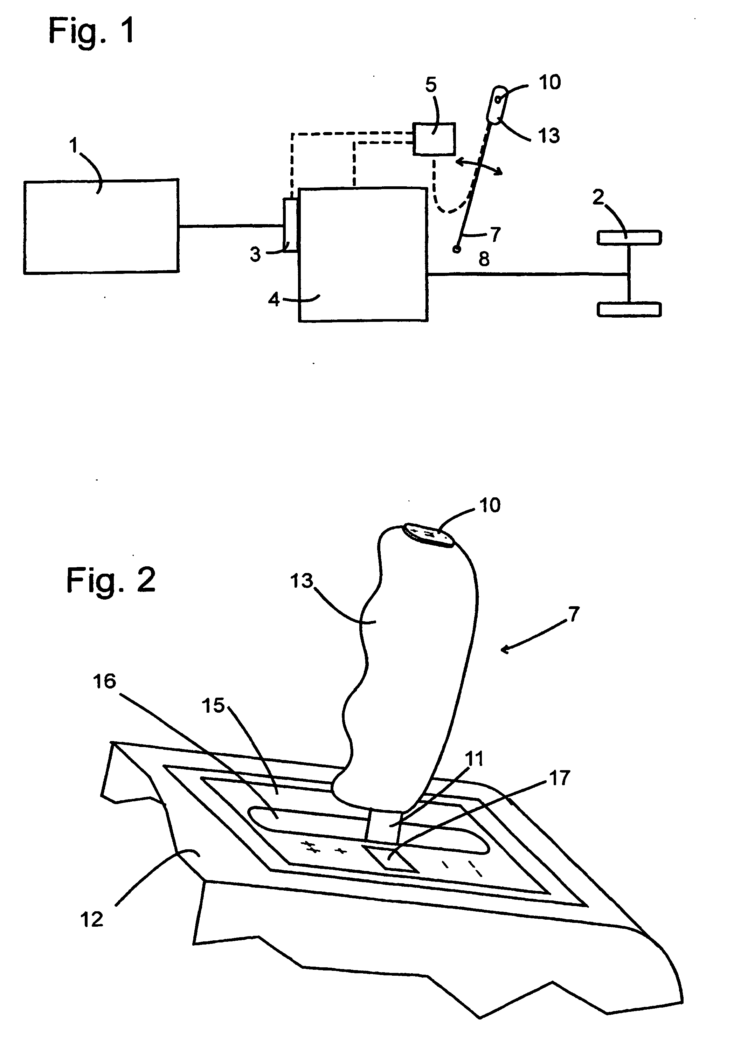

Fig. 1 zeigt ein Blockdiagramm eines erfindungsgemäßen Triebstrangs für ein Kraftfahrzeug. Der Triebstrang verbindet in bekannter Weise einen Motor 1 mit angetriebenen Rädern 2 des Kraftfahrzeugs und umfasst eine Kupplung 3 sowie ein Automatik-Schaltgetriebe 4.

Der Betrieb der Kupplung 3 sowie die Gangwahl des Automatik-Schaltgetriebes 4 unterliegt der Steuerung durch eine elektronische Schaltung 5. Diese ist mit in der Fig. nicht dargestellten Sensoren zum Erfassen der Stellung eines Schalthebels 7 verbunden, der in einem Trägermechanismus, hier einem Drehgelenk 8, mit einem Schwenkfreiheitsgrad gehalten ist. Selbstverständlich könnte das Drehgelenk 8 auch durch eine Schienenführung und der Schwenkfreiheitsgrad des Schalthebels 7 durch einen Translationsfreiheitsgrad ersetzt sein.

Der Schalthebel 7 hat eine stabile Ruheposition, aus der heraus er in entgegengesetzte Richtungen in eine erste bzw. eine zweite Umschaltstellung schwenkbar ist. Die zwei Umschaltstellungen des Schalthebels 7 sind nicht stabil; wenn der Schalthebel 7 in einer der Umschaltstellungen losgelassen wird, kehrt er, z.B. durch eine (nicht dargestellte) Feder angetrieben, in seine Ruhestellung zurück.

Die elektronische Schaltung 5 ist durch einen an einem Griff 13 des Schalthebels 7 angebrachten Schalter 10 zwischen einem ersten und einem zweiten Betriebszustand umschaltbar, wobei die Reaktion der elektronischen Schaltung 5 auf die Erfassung des Schalthebels in einer der Umschaltstellungen je nach Funktionszustand variiert.

Im ersten Funktionszustand der elektronischen Schaltung 5 kann das Schaltgetriebe 4, je nach von der elektronischen Schaltung 5 ausgegebenen Steuerbefehl, einen Parkmodus, einen Rückwärtslaufmodus, einen Leerlaufmodus, einen Vorwärtslaufmodus mit automatischer Auswahl des Ganges unter sämtlichen am Getriebe 4 einlegbaren Gängen sowie ein oder mehrere Modi mit automatischer Gangwahl unter einer reduzierten Anzahl von niedrigen Gängen einnehmen.

Beim Anlassen des Funktionszustands befindet sich die elektronische Schaltung in dem ersten Funktionszustand und hält das Getriebe 4 im Parkmodus. Durch jeweils einmaliges Bewegen des Schalthebels 7 in die erste Umschaltstellung wird die elektronische Schaltung veranlasst, das Getriebe der Reihe nach in den Rückwärtslaufmodus, den Leerlaufmodus, den Vorwärtslaufmodus mit automatischer uneingeschränkter Gangwahl, usw. zu schalten. Wenn der letzte dieser Modi, in dem die elektronische Schaltung 5 das Getriebe 4 fest im ersten Gang hält, erreicht ist, bleiben weitere Bewegungen des Schalthebels 7 in diese erste Umschaltstellung wirkungslos. Bewegungen des Schalthebels in die gegenüberliegende zweite Umschaltstellung verursachen eine Umschaltung zwischen den verschiedenen Modi des Getriebes in umgekehrter Reihenfolge.

Bei einer bevorzugten Ausgestaltung des erfindungsgemäßen Steueraggregats ist der Schalthebel 7 über die erste und/oder die zweite Schaltstellung hinaus in eine dritte und/oder vierte Schaltstellung bewegbar. Um für den Fahrer fühlbar zu machen, dass er im Begriff ist, über die erste oder zweite Schaltstellung hinaus zu schalten, nimmt die auf den Schalthebel 7 wirkende Rückstellkraft abrupt zu, sobald dieser über die erste oder zweite Schaltstellung hinaus bewegt wird. Ein Bewegen in die dritte bzw. vierte Schaltstellung erlaubt es, einzelne Modi des Getriebes 4 beim Umschalten zu überspringen. Während bei einem im Parkmodus befindlichen Getriebe 4 das Bewegen des Schalthebels 7 in die erste Umschaltstellung zum Umschalten in den Rückwärtslaufmodus führt, so hat das Bewegen des Schalthebels in die jenseits der ersten Umschaltstellung liegende dritte Umschaltstellung einen Wechsel in den Vorwärtslaufmodus mit uneingeschränkter Gangwahl zur Folge. Umgekehrt führt ein Bewegen des Schalthebels 7 in die jenseits der zweiten Umschaltstellung liegende vierte Umschaltstellung zu einem direkten Übergang von einem Vorwärtslaufmodus in den Parkmodus unter Überspringung insbesondere des Rückwärtslaufmodus.

Wenn der Fahrer den Schalter 10 betätigt, geht die elektronische Schaltung 5 in ihren zweiten Funktionszustand über. In diesem Funktionszustand ist die automatische Gangwahl suspendiert; der beim Übergang in diesen Modus eingelegte Gang des Schaltgetriebes 4 bleibt erhalten, solange nicht der Fahrer der elektronischen Schaltung 5 einen Befehl zum Wechseln des Gangs erteilt. Dies tut er jeweils durch Bewegen des Schalthebels 7 in eine der wenigstens zwei oder, bei der oben betrachteten weiterentwickelten Ausgestaltung, bis zu vier Umschaltstellungen. Auf das Erfassen einer Bewegung des Schalthebels 7 in die erste Umschaltstellung reagiert die elektronische Schaltung 5 durch Dekrementieren des im Schaltgetriebe 4 eingelegten Gangs um eine Stufe, sofern sich das Getriebe 4 nicht bereits im ersten Gang befindet und eine weitere Dekrementierung somit unmöglich ist. Auf eine Bewegung des Schalthebels 7 in die zweite Umschaltstellung reagiert die elektronische Schaltung 5 durch Inkrementieren des eingelegten Gangs um eine Stufe, solange, bis der höchste einlegbare Gang erreicht ist.

Die Reaktion auf eine Bewegung des Schalthebels 7 in die dritte bzw. vierte Umschaltstellung kann die gleiche sein wie auf eine Bewegung in die erste bzw. zweite Umschaltstellung. Wenn Motor 1 und Getriebe 4 dies zulassen, kann jedoch auch vorgesehen werden, dass in der dritten bzw. vierten Umschaltstellung jeweils eine Dekrementierung bzw. Inkrementierung des eingelegten Gangs um jeweils zwei Stufen erfolgt.

Fig. 2 zeigt eine perspektivische Ansicht eines Schalthebels für das erfindungsgemäße Steueraggregat, montiert an einer Mittelkonsole 12 eines Kraftfahrzeugs. Der Schalthebel 7 weist einen in seiner Längsrichtung langgestreckten Griff 13 auf, der ergonomisch so geformt ist, dass er von einem Fahrer mit dem Handballen und vier Fingern bequem umgriffen werden kann. Im Bewegungsbereich des zum Greifen des Griffs 13 nicht benötigten Daumens des Fahrers, am Längsende des Griffs 13, befindet sich der Schalter 10, der durch Drücken von einem geschlossenen in einen offenen Zustand und zurück schaltbar ist.

In Fig. 2 ist dieser Schalter 10 leicht über das Längsende des Griffs 13 erhaben dargestellt; er kann aber auch vorteilhaft geringfügig versenkt angeordnet sein, so dass er davor geschützt ist, unwillkürlich betätigt zu werden, wenn der Fahrer seinen Handballen von oben auf den Griff 13 legt.

Der Schalthebel 7 ist in der Fig. in seiner Ruhestellung gezeigt. Ein Schlitz 16 in einer Maske 15 der Konsole liegt in für den Fahrer sichtbarer Weise den einzigen Bewegungsfreiheitsgrad des Schalthebels 7, in etwa in Längsrichtung des Fahrzeugs, fest. Markierungen "-", "+", "- -" und "+ +" auf der Maske 15 kennzeichnen die Lage der ersten bis vierten Umschaltstellung, in dieser Reihenfolge. Da an der Stellung des Schalthebels 7 nicht erkennbar ist, in welchem Modus und/oder welchem Gang sich das Schaltgetriebe 4 zu einem gegebenen Zeitpunkt befindet, ist ein Anzeigeelement 17 für diese Angaben, z. B. in Form einer LED- oder LCD-Anzeige, an der Maske 15 angebracht. Alternativ oder ergänzend kann ein entsprechendes Anzeigeelement am Armaturenbrett des Fahrzeugs in einer gut sichtbaren Position, z.B. in der Nähe des Tachometers, vorgesehen sein.

Eine zweite Ausgestaltung eines Schalthebels 7' für das erfindungsgemäße Steueraggregat ist in Fig. 3 gezeigt. Sie unterscheidet sich von der Ausgestaltung der Fig. 2 durch die Orientierung der Längsachse des langgestreckten Griffs 13'. Während diese bei der Ausgestaltung der Fig. 2 parallel zum Schaft 11 des Schalthebels 7 verläuft, ist sie im hier betrachteten Falle rechtwinklig dazu und horizontal orientiert. Der Schalter 10' ist wie zuvor an einem Längsende des Griffs 13' angeordnet, so dass der Griff bequem mit dem Handballen und vier Fingern umfasst werden kann, ohne Gefahr zu laufen, dass der Schalter 10' ungewollt betätigt wird.

Bei der in Fig. 4 gezeigten dritten Ausgestaltung kann der Schalthebel 7" im ersten Funktionszustand der elektronischen Schaltung 5 eine Mehrzahl von stabilen Positionen einnehmen, denen jeweils einer der Modi Parken, Rückwärtslauf, Leerlauf, Vorwärtslauf mit uneingeschränkter Gangwahl, ... entspricht. Den verschiedenen Modien entsprechende Symbole P, R, N, D, 3, 2, 1 sind an der Maske 15" jeweils neben den entsprechenden Ruhepositionen an einer Seite des Schlitzes 16 angebracht. Wenn sich der Schalthebel in der im Vorwärtslaufmodus mit uneingeschränkter Gangwahl entsprechenden, mit dem Symbol D gekennzeichneten Stellung befindet, ist durch Betätigen des Schalters 10 die elektronische Schaltung 5 in ihren zweiten Funktionszustand umschaltbar. Gleichzeitig mit dem Übergang in den zweiten Funktionszustand beschränken nicht dargestellte Mittel, etwa im Innern der Konsole 12 in den Weg des Hebels 7" eingeschobene Querriegel, die Bewegungsfreiheit des Schalthebels 7" auf die unmittelbare Nachbarschaft der Position D. Kraftsensoren, die z. B. mit den Querriegeln gekoppelt sein können, erfassen, ob der Schalthebel erste und zweite oder erste bis vierte Umschaltstellungen an den Enden seines Bewegungsfreiheitsbereichs erreicht und veranlassen über die elektronische Schaltung 5 eine entsprechende Änderung des am Schaltgetriebe 4 eingelegten Gangs.

Bei den oben beschriebenen Ausführungsbeispielen wurde davon ausgegangen, dass die Steuerung des am Schaltgetriebe 4 eingelegten Gangs in jedem der zwei Funktionszustände durch eine einheitliche elektronische Schaltung 5 erfolgt. Insbesondere im Falle des dritten Ausführungsbeispiels ist auch denkbar, dass im ersten Funktionszustand das Umschalten zwischen den diversen diesem Funktionszustand zugeordneten Modi sowie die automatische Gangwahl mit Hilfe einer nicht elektronischen, insbesondere hydraulischen Steuervorrichtung stattfindet, während lediglich im zweiten Funktionszustand die Umschaltung der Gänge mit Hilfe einer elektronischen Steuerschaltung erfolgt.

### Bezugszeichenliste

- 1: Motor
- 2: Rad
- 3: Kupplung
- 4: Automatik-Schaltgetriebe
- 5: Elektronische Schaltung
- 6: Sensor
- 7: Schalthebel
- 8: Drehgelenk
- 9: -
- 10: Schalter
- 11: Schaft
- 12: Mittelkonsole
- 13: Griff
- 14: -
- 15: Maske
- 16: Schlitz
- 17: Anzeige

## Patentansprüche

1. Betriebsart-Steueraggregat für ein Automatikgetriebe (4), mit
- einem Schalthebel (7), der in einem Trägermechanismus (8) bewegbar gehalten ist,
- einer Steuereinheit (5) zum Umschalten des Getriebes (4) zwischen einem Vorwärtslaufmodus mit automatischer Gangwahl und wenigstens einem weiteren Modus wie etwa einem Rückwärtslauf-, Leerlauf- oder Parkmodus in Abhängigkeit von der Bewegung des Schalthebels (7, 7', 7"),
- einer Steuerschaltung (5), die in einem ersten Zustand die Steuerung des Getriebes (4) durch die Steuereinheit (5) zulässt und in einem zweiten Zustand einen in dem Automatikgetriebe (4) einzulegenden Gang in Abhängigkeit von der Bewegung des Schalthebels (7, 7', 7'') festlegt, und
- einem an dem Schalthebel (7, 7', 7") angebrachten Schalter (10) zum Umschalten der Steuerschaltung (5) zwischen dem ersten und dem zweiten Zustand,
**dadurch gekennzeichnet, dass** der Schalter (10, 10') am Griff (13, 13') des Schalthebels (7, 7', 7'') angebracht ist.

2. Betriebsart-Steueraggregat nach Anspruch 1, **dadurch gekennzeichnet, dass** der Schalthebel (7, 7', 7") einen Griff (13, 13') mit einer langgestreckten Form hat und der Schalter (10) an einem Längsende des Griffs (13, 13') angebracht ist.

3. Betriebsart-Steueraggregat nach einem der vorhergehenden Ansprüche, **dadurch gekennzeichnet, dass** der Schalthebel (7, 7', 7") wenigstens im zweiten Zustand der Steuerschaltung (5) eine einzige stabile Stellung aufweist.

4. Betriebsart-Steueraggregat nach Anspruch 3, **dadurch gekennzeichnet, dass** der Schalthebel (7, 7', 7") auch im ersten Zustand der Steuerschaltung (5) eine einzige stabile Stellung aufweist.

5. Betriebsart-Steueraggregat nach einem der vorhergehenden Ansprüche, **dadurch gekennzeichnet, dass** der Schalthebel (7, 7', 7") einen einzigen Freiheitsgrad für die Schaltbewegung aufweist.

6. Betriebsart-Steueraggregat nach Anspruch 5, **dadurch gekennzeichnet, dass** der Schalthebel (7, 7', 7") an den Enden seines Bewegungsfreiheitsbereichs jeweils wenigstens eine erste bzw. zweite Umschaltstellung aufweist, in der er durch einen mit der Steuerschaltung (5) verbundenen Sensor erfassbar ist, und dass die Steuerschaltung (5) in ihrem zweiten Zustand bei Erfassen einer der ersten oder zweiten Umschaltstellung des Schalthebels (7, 7', 7") den in dem Getriebe (4) einzulegenden Gang, soweit möglich, um eine Schaltstufe inkrementiert bzw. dekrementiert.

7. Betriebsart-Steueraggregat nach Anspruch 6, **dadurch gekennzeichnet, dass** der Schalthebel (7, 7', 7") an wenigstens einem Ende seines Bewegungsfreiheitsbereichs eine dritte oder vierte Umschaltstellung jenseits der ersten oder zweiten Umschaltstellung aufweist, in der er durch einen mit der Steuerschaltung verbundenen Sensor erfassbar ist, und dass die Steuerschaltung in ihrem zweiten Zustand bei Erfassen der dritten oder vierten Umschaltstellung den in dem Getriebe einzulegenden Gang, soweit möglich, um zwei Schaltstufen inkrementiert oder dekrementiert.

8. Betriebsart-Steueraggregat nach Anspruch 6 oder 7, **dadurch gekennzeichnet, dass** im ersten Zustand der Steuerschaltung (5) bei Erfassen einer Umschaltstellung die Steuereinheit (5) den Modus des Getriebes umschaltet.

9. Betriebsart-Steueraggregat nach einem der vorhergehenden Ansprüche, **dadurch gekennzeichnet, dass** die Steuerschaltung und die Steuereinheit in einer gemeinsamen elektronischen Schaltung (5) realisiert sind.

## Claims

1. Mode control assembly for an automatic transmission (4), with
- a gear lever (7) which is held movably in a support mechanism (8),
- a control unit (5) for changing the transmission (4) between a forward mode with automatic gear selection and at least one further mode such as a reverse, idling or parking mode as a function of the movement of the gear lever (7, 7', 7"),
- a control circuit (5) which in a first state allows control of the transmission (4) by the control unit (5) and in a second state fixes a gear to be engaged in the automatic transmission (4) as a function of the movement of the gear lever (7, 7', 7"), and
- a switch (10) mounted on the gear lever (7, 7', 7") for switching the control circuit (5) between the first and the second state,
**characterised in that** the switch (10, 10') is mounted on the grip (13, 13') of the gear lever (7, 7', 7").

2. Mode control assembly according to claim 1, **characterised in that** the gear lever (7, 7', 7") has a grip (13, 13') with an elongate shape and the switch (10) is mounted on a longitudinal end of the grip (13, 13').

3. Mode control assembly according to any of the preceding claims, **characterised in that** the gear lever (7, 7', 7") has a single stable position at least in the second state of the control circuit (5).

4. Mode control assembly according to claim 3, **characterised in that** the gear lever (7, 7', 7") has a single stable position in the first state of the control circuit (5) too.

5. Mode control assembly according to any of the preceding claims, **characterised in that** the gear lever (7, 7', 7") has a single degree of freedom for the gear-change movement.

6. Mode control assembly according to claim 5, **characterised in that** the gear lever (7, 7', 7") has at each of the ends of its range of freedom of movement at least one first or second change position in which it can be detected by a sensor connected to the control circuit (5), and **in that** the control circuit (5) in its second state, upon detection of one of the first or second change position of the gear lever (7, 7', 7"), as far as possible changes up or down by one step the gear to be engaged in the transmission (4).

7. Mode control assembly according to claim 6, **characterised in that** the gear lever (7, 7', 7") at at least one end of its range of freedom of movement has a third or fourth change position beyond the first or second change position, in which it can be detected by a sensor connected to the control circuit, and **in that** the control circuit in its second state, upon detection of the third or fourth change position, as far as possible changes up or down by two steps the gear to be engaged in the transmission.

8. Mode control assembly according to claim 6 or 7, **characterised in that** in the first state of the control circuit (5), upon detection of a change position, the control unit (5) switches the mode of the transmission.

9. Mode control assembly according to any of the preceding claims, **characterised in that** the control circuit and the control unit are constructed in a common electronic circuit (5).

## Revendications

1. Ensemble de commande de mode de fonctionnement pour une transmission automatique (4), ayant :
- un levier de commutation (7) qui est maintenu de façon mobile dans un mécanisme de support (8) ;
- une unité de commande (5) pour la commutation de la transmission (4) entre un mode de marche avant avec sélection automatique de rapport de transmission et au moins un autre mode, comme par exemple un mode de marche arrière, de marche au point mort ou de stationnement en fonction du déplacement du levier de commutation (7, 7', 7'') ;
- un circuit de commande (5) qui, dans un premier état, autorise la commande de la transmission (4) au moyen de l'unité de commande (5) et, dans un deuxième état, détermine un rapport de transmission à engager dans la transmission automatique (4) en fonction du déplacement du levier de commutation (7, 7', 7") ; et
- un commutateur (10) installé sur le levier de commutation (7, 7', 7") pour commuter le circuit de commande (5) entre les premier et deuxième états ;
**caractérisé en ce que** le commutateur (10, 10') est installé sur la poignée (13, 13') du levier de commutation (7, 7', 7'').

2. Ensemble de commande de mode de fonctionnement selon la revendication 1, **caractérisé en ce que** le levier de commutation (7, 7', 7'') comporte une poignée (13, 13') ayant une forme allongée et **en ce que** le commutateur (10) est installé sur une extrémité longitudinale de la poignée (13, 13').

3. Ensemble de commande de mode de fonctionnement selon l'une des revendications précédentes, **caractérisé en ce que** le levier de commutation (7, 7', 7'') présente une seule position stable au moins dans le deuxième état du circuit de commande (5).

4. Ensemble de commande de mode de fonctionnement selon la revendication 3, **caractérisé en ce que** le levier de commutation (7, 7', 7'') présente également une seule position stable dans le premier état du circuit de commande (5).

5. Ensemble de commande de mode de fonctionnement selon l'une des revendications précédentes, **caractérisé en ce que** le levier de commutation (7, 7', 7'') présente un seul degré de liberté pour le déplacement de commutation.

6. Ensemble de commande de mode de fonctionnement selon la revendication 5, **caractérisé en ce que** le levier de commutation (7, 7', 7'') présente aux extrémités de sa zone de liberté de déplacement, respectivement, au moins une première et une deuxième positions de commutation, dans laquelle il peut être détecté au moyen d'un capteur relié au circuit de commande (5), et **en ce que**, dans son deuxième état, le circuit de commande (5) augmente ou diminue dans la mesure du possible d'un degré de commutation le rapport de transmission à engager dans la transmission (4) lors de la détection de l'une parmi la première ou de la deuxième position de commutation du levier de commutation (7, 7', 7'').

7. Ensemble de commande de mode de fonctionnement selon la revendication 6, **caractérisé en ce que** le levier de commutation (7, 7', 7'') présente à au moins une extrémité de sa zone de liberté de déplacement une troisième ou quatrième position de commutation au-delà de la première ou deuxième position de commutation, dans laquelle il peut être détecté au moyen d'un capteur relié au circuit de commande, et **en ce que**, dans son deuxième état, le circuit de commande augmente ou diminue dans la mesure du possible de deux degrés de commutation le rapport de transmission à engager dans la transmission lors de la détection de la troisième ou quatrième position de commutation.

8. Ensemble de commande de mode de fonctionnement selon l'une des revendications 6 ou 7, **caractérisé en ce que** l'unité de commande (5) commute le mode de transmission lors de la détection d'une position de commutation dans le premier état du circuit de commande (5).

9. Ensemble de commande de mode de fonctionnement selon l'une des revendications précédentes, **caractérisé en ce que** le circuit de commande et l'unité de commande sont réalisés dans un circuit électronique commun (5).
